# EUROPEAN PATENT APPLICATION

(11) **EP 4 057 388 A1**
(43) Date of publication of application: **14.09.2022**
(21) Application number: 22155555.0
(22) Date of filing: 08.02.2022
(51) Int. Cl.: H01M 4/36, H01M 4/13, H01M 10/0525, H01M 4/139, H01M 4/02

(54) **ELECTRODE FOR SECONDARY BATTERY AND SECONDARY BATTERY INCLUDING SAME**

(30) Priority: 12.03.2021 JP 2021040442
(71) Applicant: Prime Planet Energy & Solutions, Inc., Chuo-ku Tokyo 103-0022 (JP)
(72) Inventor: SHIONOYA, Haruka, Tokyo, 103-0022 (JP); ENOKIHARA, Katsushi, Tokyo, 103-0022 (JP); MASHIMO, Naohiro, Tokyo, 103-0022 (JP); KITAYOSHI, Masanori, Tokyo, 103-0022 (JP)
(74) Representative: Kuhnen & Wacker Patent- und Rechtsanwaltsbüro PartG mbB

(57) **Abstract**

An electrode of a secondary battery includes an electrode active material layer containing active material particles. A concave part is formed on the surface of the electrode active material layer. When the electrode active material layer is uniformly divided into three layers, an upper layer, an intermediate layer and a lower layer, in the thickness direction from the surface of the concave part to the electrode current collector, and the electrode densities (g/cm³) of the upper layer, the intermediate layer, and the lower layer are d₁, d₂, and d₃, respectively, they have a relationship of 0.8<(d₁/d₃)<1.1. The porosity of the electrode active material layer is 10% or more and 50% or less. The area ratio of the concave part is 2% or more and 40% or less. The volume ratio of the concave part is 5% or more and 14% or less.

## Description

### BACKGROUND OF THE INVENTION

### 1. Field of the Invention

The present disclosure relates to an electrode for a secondary battery and a secondary battery including same, and specifically, to an electrode for a secondary battery including a concave part on a surface of an electrode active material layer.

### 2. Description of the Related Art

Secondary batteries such as lithium ion secondary batteries are lighter in weight and have a higher energy density than conventional batteries, and thus are preferably used as high-output power supplies for mounting on vehicles or power supplies for computers and mobile terminals. In particular, lithium ion secondary batteries are preferably used as high-output power supplies for driving vehicles such as battery electric vehicles (BEV), Hybrid Electric Vehicles (HEV), and Plug-in Hybrid Electric Vehicles (PHEV).

As a typical structure of a positive electrode and a negative electrode (hereinafter simply referred to as an "electrode" when positive and negative electrodes are not particularly distinguished) included in this type of secondary battery, one in which an electrode active material layer containing an electrode active material as a main component is formed on one surface or both surfaces of a foil-like electrode current collector may be exemplified. Such an electrode active material layer is formed by applying a slurry (paste) electrode mixture (hereinafter referred to as a "mixture slurry") prepared by dispersing solid components such as an electrode active material, a binding material (binder), and a conductive material in a predetermined solvent to a surface of a current collector to form a coating film, drying the coating film, and then applying a pressure to obtain a predetermined density and thickness.

Japanese Patent Application Publication No. 2011-253820 discloses a technology in which cathode suspensions and anode suspensions are prepared, and deposited layer by layer, and thus structures such as protrusions and depressions are imparted to the surface of the electrode. It is said that, when the electrode has such a surface shape, an area in which a charge transfer reaction occurs is larger, and the output density and energy density of the battery can be improved.

### SUMMARY OF THE INVENTION

Incidentally, a secondary battery used as a high-output power supply for driving a vehicle is desired to have higher performance. For example, if the diffusion resistance of ions on the surface of the electrode active material layer can be reduced, battery characteristics such as durability and input and output characteristics can be improved.

Attempts have been made to reduce the diffusion resistance of ions by increasing a surface area of the electrode active material layer, but this comes with various difficulties. According to the findings of the inventors, for example, when the surface of the electrode active material layer is made uneven by a laser after the coating film is dried, there are risks of the increased ion diffusion resistance on the surface of the laser-emitted part, capacity loss due to the removed electrode active material layer, and the removed electrode active material layer remaining. In addition, a method of gradually depositing an electrode material to impart a concave/convex structure has complicated steps, which leads to an increase in cost and restricts the electrode size.

The present disclosure has been made in view of the above circumstances, and an object of the present disclosure is to provide an electrode for a secondary battery having an electrode active material layer with a reduced ion diffusion resistance. In addition, an object of the present disclosure is to provide a secondary battery using such an electrode.

In order to achieve the above object, an electrode for a secondary battery is provided. The electrode for a secondary battery disclosed here includes any electrode of positive and negative electrodes of a secondary battery including an electrode current collector and an electrode active material layer formed on the electrode current collector and containing active material particles as an electrode active material. A concave part is formed on the surface of the electrode active material layer. When the electrode active material layer is uniformly divided into three layers, an upper layer, an intermediate layer and a lower layer, in the thickness direction from the surface of the concave part to the electrode current collector, and the electrode densities (g/cm³) of the upper layer, the intermediate layer, and the lower layer are d₁, d₂, and d₃, respectively, they have a relationship of 0.8<(d₁/d₃)<1.1. The porosity of the electrode active material layer is 10% or more and 50% or less. The area ratio of the concave part is 2% or more and 40% or less. The volume ratio of the concave part is 5% or more and 14% or less.

In such an electrode for a secondary battery, the above concave part is formed on the surface of the electrode active material layer, and there is no significant difference in the electrode density of the electrode active material layer between the upper layer and the lower layer. Accordingly, the ion diffusion resistance of the electrode active material layer is reduced to a low level.

The active material particles may include hollow active material particles having a hollow part. Since the active material particles have a hollow part, it is possible to suitably maintain voids in the electrode active material layer. Accordingly, it is possible to suitably reduce the ion diffusion resistance of the electrode active material layer.

In one preferable aspect, the porosity of the electrode active material layer is 33% or more and 45% or less.

In one preferable aspect, the concave part is a groove formed continuously from one end to the other end of the surface of the electrode active material layer. With such a configuration, it is possible to more suitably reduce the ion diffusion resistance of the electrode active material layer.

According to the present disclosure, there is provided a secondary battery including positive and negative electrodes, and the electrode according to any one of the aspects disclosed here is provided as at least one electrode of the positive and negative electrodes.

### BRIEF DESCRIPTION OF THE DRAWINGS

FIG. 1 is a flowchart showing rough steps of a method of producing an electrode according to one embodiment;
FIGS. 2A to 2D shows illustrative diagrams schematically showing existence forms of a solid phase (solid component such as active material particles), a liquid phase (solvent), and a gas phase (void) in agglomerated particles constituting a moisture powder, with FIG. 2A showing a pendular state, FIG. 2B showing a funicular state, FIG. 2C showing a capillary state, and FIG. 2D showing a slurry state;
FIG. 3 is an illustrative diagram schematically showing an example of a stirring granulation machine used for producing a moisture powder disclosed here;
FIG. 4 is an illustrative diagram schematically showing a configuration of a roll film formation device according to one embodiment;
FIG. 5 is a block diagram schematically showing a configuration of an electrode production device including a roll film formation unit according to one embodiment;
FIG. 6 is a side view schematically showing an electrode for a secondary battery according to one embodiment;
FIGS. 7A to 7C shows plan views schematically showing an electrode for a secondary battery according to one embodiment; and
FIG. 8 is an illustrative diagram schematically showing a lithium ion secondary battery according to one embodiment.

### DESCRIPTION OF THE PREFERRED EMBODIMENTS

Hereinafter, an example of an electrode for a secondary battery disclosed here and a method of producing the same will be described in detail using an electrode suitably used for a lithium ion secondary battery, which is a typical example of a secondary battery, as an example.

Components other than those particularly mentioned in this specification that are necessary for implementation can be recognized by those skilled in the art as design matters based on the related art in the field. The content of the technology disclosed here can be implemented based on content disclosed in this specification and common general technical knowledge in the field.

Here, in this specification, when a numerical range is described as A to B (where A and B are arbitrary numbers), this is the same as a general interpretation indicating A or more and B or less (including a range exceeding A but below B).

In this specification, the term "lithium ion secondary battery" refers to a secondary battery in which lithium ions in an electrolyte are responsible for charge transfer. In addition, the term "electrode body" refers to a structure that forms a main body of a battery composed of a positive electrode and a negative electrode. In this specification, an electrode is simply described when there is no need to particularly distinguish a positive electrode and a negative electrode. The electrode active material (that is, a positive electrode active material or a negative electrode active material) is a compound that can reversibly occlude and release a chemical species (a lithium ion in a lithium ion secondary battery) serving as a charge carrier.

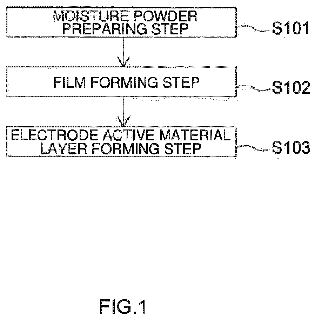

FIG. 1 shows the steps of a method of producing an electrode for a secondary battery according to the present embodiment. The method of producing an electrode for a secondary battery according to the present embodiment includes a step (moisture powder preparing step) S101 in which a moisture powder formed of agglomerated particles including at least a plurality of active material particles, a binder resin, and a solvent is prepared, and here, in the moisture powder at least 50% by count or more of the agglomerated particles form a pendular state or a funicular state in a solid phase, a liquid phase, and a gas phase; a step (film forming step) S102 in which a coating film composed of the moisture powder is formed on an electrode current collector using the moisture powder when the gas phase remains; and a step (electrode active material layer forming step) S103 in which concavities/convexities are transferred using a mold having a convex part with a predetermined height on the surface part of the formed coating film, the coating film to which concavities/convexities are transferred is dried, the dried coating film is pressed, and thus an electrode active material layer on which the concave part is formed is formed.

As shown in the content of step S101 and step S102, in the method of producing an electrode for a secondary battery according to the present embodiment, moisture powder sheeting (MPS) in which a film is formed using a moisture powder is used.

### Moisture Powder Preparing Step

In the moisture powder preparing step S101, a moisture powder formed of agglomerated particles including at least a plurality of active material particles, a binder resin, and a solvent is prepared. In the moisture powder at least 50% by count or more of the agglomerated particles form a pendular state or a funicular state in a solid phase, a liquid phase, and a gas phase.

First, components of agglomerated particles forming a moisture powder will be described. The active material particle and the binder resin included in the agglomerated particles are solid components.

As the particulate electrode active material that is used, a compound having a composition used as a negative electrode active material or a positive electrode active material of a conventional secondary battery (where, a lithium ion secondary battery) can be used. Examples of negative electrode active materials include carbon materials such as graphite, hard carbon, and soft carbon. In addition, examples of positive electrode active materials include lithium transition metal composite oxides such as LiNi_{1/3}Co_{1/3}Mn_{1/3}O₂, LiNiO₂, LiCoO₂, LiFeO₂, LiMn₂O₄, and LiNi_{0.5}Mn_{1.5}O₄, and lithium transition metal phosphate compounds such as LiFePO₄. The average particle size of the electrode active material is not particularly limited, and is suitably about 0.1 µm to 50 µm, and preferably about 1 to 20 µm. Here, in this specification, "average particle size" refers to a particle size (D₅₀, also referred to as a median diameter) corresponding to a cumulative frequency of 50 vol% from the fine particle end having a small particle size in a volume-based particle size distribution based on a general laser diffraction/light scattering method. The number of active material particles included in the agglomerated particle is plural.

Here, as the active material particles, secondary particles in which a plurality of primary particles are aggregated may be used. The active material particles may include hollow active material particles. Hollow active material particles are active material particles including a shell part composed of a plurality of primary particles and a hollow part inside the shell part. The volume of the hollow part of the hollow active material particles is not particularly limited, and for example, is 0.1 or more, preferably 0.2 or more, with respect to the volume of the hollow active material particles. When hollow active material particles are included as active material particles, it is possible to suitably maintain voids contained in the electrode active material layer.

Examples of binder resins include polyvinylidene fluoride (PVDF), carboxymethyl cellulose (CMC), styrene butadiene rubber (SBR), polytetrafluoroethylene (PTFE), and polyacrylic acid (PAA). An appropriate binder resin is used depending on the solvent used.

The agglomerated particles forming a moisture powder may include a substance other than the electrode active material and the binder resin as solid components. Examples thereof include a conductive material and a thickener.

Preferable examples of conductive materials include carbon black, for example, acetylene black (AB), and carbon materials such as carbon nanotubes.

In addition, as the thickener, for example, carboxymethyl cellulose (CMC) and methyl cellulose (MC) can be preferably used.

In addition, when the electrode is an electrode of a solid-state battery, a solid electrolyte is used as the solid component. The solid electrolyte is not particularly limited, and preferable examples thereof include a sulfide solid electrolyte including Li₂S, P₂S₅, Lil, LiCl, LiBr, Li₂O, SiS₂, B₂S₃, ZmSn (here, m and n are positive numbers, and Z is Ge, Zn or Ga), Li₁₀GeP₂S₁₂ or the like as a constituent element.

Here, in this specification, "solid component" refers to a material (solid material) excluding the solvent among the above materials, and "solid component proportion" refers to a proportion of the solid component in the electrode material in which all materials are mixed.

The solvent is a component that constitutes a liquid phase in the agglomerated particles forming a moisture powder. The solvent can be used without particular limitation as long as it can suitably disperse or dissolve the binder resin. Specifically, as the solvent, for example, N-methyl-2-pyrrolidone (NMP) or an aqueous solvent (water or a mixed solvent mainly composed of water) can be preferably used.

As long as the effects of the present disclosure are not impaired, the agglomerated particles forming a moisture powder may include materials (for example, various additives) other than the above materials.

Next, the state of the moisture powder will be described. In the moisture powder, at least 50% by count or more of the agglomerated particles form a pendular state or a funicular state in a solid phase, a liquid phase, and a gas phase.

Here, the existence forms (filled state) of a solid component (solid phase), a solvent (liquid phase) and voids (gas phase) in the agglomerated particles constituting a moisture powder can be classified into four states: "pendular state," "funicular state," "capillary state," and "slurry state."

This classification is described in "Particle Size Enlargement" by Capes C. E. (published by Elsevier Scientific Publishing Company, 1980), and is currently well known. These four classifications are used in this specification, and thus the moisture powder disclosed here is clearly defined to those skilled in the art. Hereinafter, these four classifications will be specifically described.

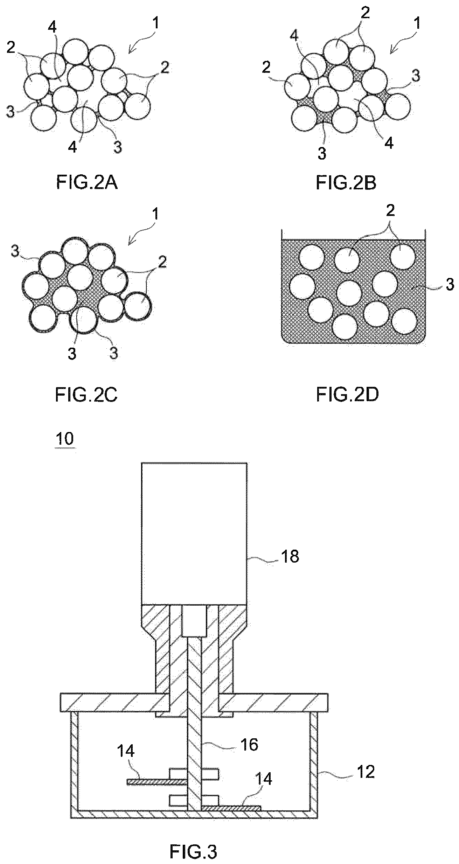

As shown in FIG. 2A, "pendular state" refers to a state in which a solvent (liquid phase) 3 is discontinuously present to crosslink active material particles (solid phase) 2 in an agglomerated particle 1, and the active material particles (solid phase) 2 may be present in a (continuous) state in which they are connected to each other. As shown, the content of the solvent 3 is relatively low, and as a result, most voids (gas phase) 4 present in the agglomerated particle 1 are continuously present and form communication holes that lead to the outside. In addition, one characteristic of the pendular state is that a continuous solvent layer is not observed over the entire outer surface of the agglomerated particle 1 in electron microscope observation (SEM observation).

In addition, as shown in FIG. 2B, "funicular state" refers to a state in which the content of the solvent in the agglomerated particle 1 is relatively higher than that of a pendulum, and a state in which the solvents (liquid phase) 3 are continuously present around the active material particles (solid phase) 2 in the agglomerated particle 1. However, since the amount of the solvent is still small, as in the pendular state, the active material particles (solid phase) 2 are present in a (continuous) state in which they are connected to each other. On the other hand, among the voids (gas phase) 4 present in the agglomerated particle 1, the proportion of communication holes that lead to the outside decreases slightly, and the abundance proportion of the discontinuous isolated voids tends to increase, but the presence of communication holes is recognized.

The funicular state is a state between the pendular state and the capillary state, and in a funicular I state where the funicular state is divided into a funicular I state (that is, a state in which the amount of the solvent is relatively small) closer to the pendular state and a funicular II state (that is, a state in which the amount of the solvent is relatively large) closer to the capillary state, it still includes a state in which no solvent layer is observed on the outer surface of the agglomerated particle 1 in electron microscope observation (SEM observation).

As shown in FIG. 2C, in the "capillary state," the content of the solvent in the agglomerated particle 1 increases, the amount of the solvent in the agglomerated particle 1 becomes close to a saturated state, a sufficient amount of the solvent 3 is continuously present around the active material particles 2, and as a result, the active material particles 2 are present in a discontinuous state. Almost all voids (gas phase) present in the agglomerated particle 1 (for example, a total void volume of 80 vol%) are present as isolated voids due to the increase in the amount of the solvent, and the abundance proportion of voids in the agglomerated particle also becomes small.

As shown in FIG. 2D, "slurry state" refers to a state in which the active material particles 2 have already been suspended in the solvent 3, and a state that cannot be called agglomerated particles. There is almost no gas phase.

In the related art, moisture powder sheeting in which a film is formed using a moisture powder is known, but in the conventional moisture powder sheeting, the moisture powder is in a so-called "capillary state" shown in FIG. 2C in which a liquid phase is continuously formed throughout the powder.

On the other hand, the moisture powder prepared in the present embodiment is a moisture powder which is brought into a state different from that of the conventional moisture powder by controlling the gas phase and in which the pendular state and the funicular state (in particular, the funicular I state) are formed. These two states have common points that the active material particles (solid phase) 2 are liquid-crosslinked by the solvent (liquid phase) 3, and at least some voids (gas phase) 4 form communication holes that lead to the outside. For convenience, the moisture powder prepared in the present embodiment is also referred to as a "gas-phase-controlled moisture powder."

When the agglomerated particles in the pendular state and the funicular state are observed with an electron microscope image (for example, scanning electron microscope (SEM) observation), no solvent layer is observed on the outer surface of the agglomerated particles, but in this case, it is preferable that no solvent layer be observed on the outer surface of at least 50% by count or more of the agglomerated particles.

The gas-phase-controlled moisture powder can be produced by applying a conventional process of producing a moisture powder in a capillary state. That is, when the amount of the solvent and the formulation of solid components (the active material particles, the binder resin, etc.) are adjusted so that the proportion of the gas phase is higher than in the related art, and specifically, many continuous voids (communication holes) that lead to the outside are formed in the agglomerated particles, it is possible to produce the moisture powder as an electrode material (electrode mixture) included in the pendular state or the funicular state (in particular, the funicular I state).

In addition, in order to realize a liquid crosslink between active materials with the smallest amount of the solvent, it is desirable that the surface of the powder material used and the solvent used have an appropriate affinity.

Examples of appropriate gas-phase-controlled moisture powders prepared in the moisture powder preparing step include a moisture powder in which a "ratio: Y/X of the true specific gravity Y to the loose bulk specific gravity X" calculated from a loose bulk specific gravity X(g/mL), which is an actually measured bulk specific gravity, measured by putting a moisture powder into a container having a predetermined volume with leveling and without applying a force, and a raw-material-based true specific gravity Y(g/mL), which is a specific gravity calculated from the composition of the moisture powder assuming that there is no gas phase, is 1.2 or more, preferably 1.4 or more (or 1.6 or more), and preferably 2 or less.

The gas-phase-controlled moisture powder can be produced by mixing respective components using a known stirring granulation machine (a mixer such as a planetary mixer).

Specifically, for example, first, materials (solid component) excluding the solvent are mixed in advance to perform a solvent-less dry dispersion treatment. Therefore, a state in which respective solid components are highly dispersed is formed. Then, a solvent and other liquid components (for example, a liquid binder) are added to the dispersed mixture and additionally mixed. Accordingly, it is possible to produce a moisture powder in which respective solid components are suitably mixed.

More specifically, a stirring granulation machine 10 as shown in FIG. 3 is prepared. The stirring granulation machine 10 includes a mixing container 12 which is typically cylindrical, a rotary blade 14 accommodated in the mixing container 12, and a motor 18 connected to the rotary blade (also referred to as a blade) 14 via a rotating shaft 16.

An electrode active material, a binder resin, and various additives (for example, a thickener and a conductive material), which are solid components, are put into the mixing container 12 of the stirring granulation machine 10, the motor 18 is driven so that the rotary blade 14 is rotated, for example, at a rotational speed of 2,000 rpm to 5,000 rpm for about 1 to 60 seconds (for example, 2 to 30 seconds), and thus a mixture of respective solid components is produced. Then, an appropriate amount of the solvent is weighed out so that the solid component is 70% or more, and more preferably 80% or more (for example, 85% to 98%), and is put into the mixing container 12, and a stirring granulation treatment is performed. Although not particularly limited, the rotary blade 14 is additionally rotated, for example, at a rotational speed of 100 rpm to 1,000 rpm for about 1 to 60 seconds (for example, 2 to 30 seconds). Accordingly, respective materials and the solvent in the mixing container 12 can be mixed to produce a moisture granulated component (moisture powder). Here, additionally, when stirring is intermittently performed at a rotational speed of about 1,000 rpm to 3,000 rpm for a short time of about 1 to 5 seconds, it is possible to prevent aggregation of the moisture powders.

The particle size of the obtained granulated component may be a particle size larger than the width of the gap between a pair of rollers of a roll film formation device to be described below. When the width of the gap is about 10 µm to 100 µm (for example, 20 µm to 50 µm), the particle size of the granulated component may be 50 µm or more (for example, 100 µm to 300 µm).

Here, in the gas-phase-controlled moisture powder to be prepared, a solid phase, a liquid phase, and a gas phase form a pendular state or a funicular state (preferably, the funicular I state). Therefore, the solvent content is low to the extent that no solvent layer is observed on the outer surface of the agglomerated particles in electron microscope observation (for example, the solvent proportion may be about 2 to 15 mass% or 3 to 8 mass%), and on the other hand, the gas phase part is relatively large.

In order to obtain such a state of a solid phase, a liquid phase, and a gas phase, in the above granulated component production operation, various treatments and operations that can increase the gas phase can be incorporated. For example, during stirring granulation or after granulation, the granulated component is exposed to a dry gas (air or inert gas) atmosphere heated to a temperature about 10°C to 50°C higher than room temperature, and thus an excess solvent may be evaporated. In addition, in order to promote formation of agglomerated particles in the pendular state or funicular I state when the amount of the solvent is small, compressive granulation with a relatively strong compressive action may be used in order to adhere the active material particles and other solid components to each other. For example, a compressive granulation machine in which granulation is performed when a compressive force is applied between rollers while a powder raw material is supplied between a pair of rollers in a vertical direction may be used.

### Film Forming Step

Next, the film forming step S102 will be described. In the film forming step S102, using the moisture powder prepared above, a coating film composed of the moisture powder is formed on an electrode current collector when the gas phase of the moisture powder remains.

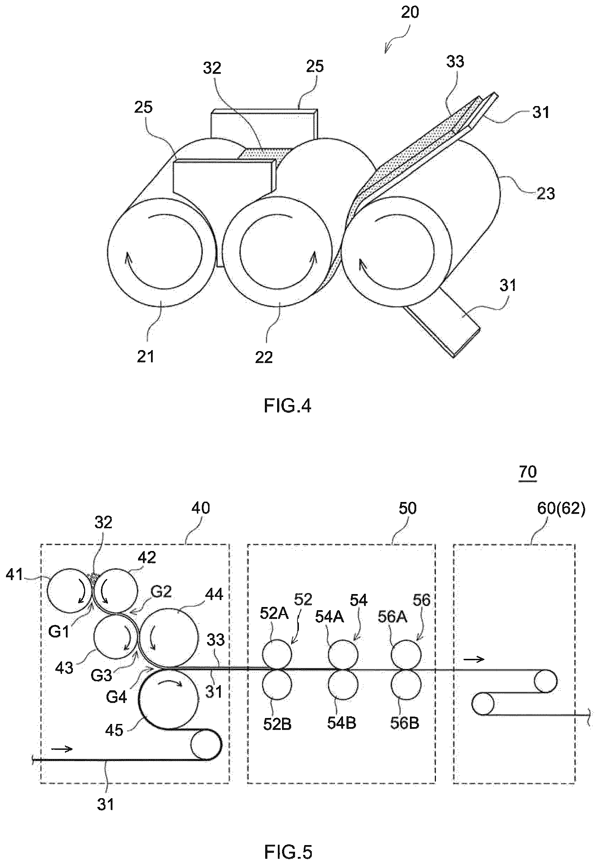

FIG. 4 is an illustrative diagram schematically showing a roll film formation device used for producing an electrode for a secondary battery according to the present embodiment.

FIG. 5 is an illustrative diagram structurally showing a schematic configuration of an electrode production device used for producing an electrode for a secondary battery according to the present embodiment. Roughly speaking, an electrode production device 70 includes a film formation unit 40 that supplies a moisture powder 32 onto the surface of a sheet-shaped electrode current collector 31 that has been transported from a supply chamber (not shown) and forms a coating film 33, a coating film processing unit 50 that presses the coating film 33 in the thickness direction and performs a concave/convex forming treatment on the surface of the coating film, and a drying unit 60 that appropriately dries the coating film 33 after the surface concave/convex forming treatment, and forms an electrode active material layer.

Regarding the electrode current collector used in the film forming step S102, a metal electrode current collector used as an electrode current collector of this type of secondary battery can be used without particular limitation. When the electrode current collector is a positive electrode current collector, the electrode current collector is made of, for example, a metal material having favorable conductivity such as aluminum, nickel, titanium, or stainless steel. The positive electrode current collector is preferably made of aluminum, and particularly preferably an aluminum foil. When the electrode current collector is a negative electrode current collector, the electrode current collector is made of, for example, a metal material having favorable conductivity such as copper, an alloy mainly composed of copper, nickel, titanium, or stainless steel. The negative electrode current collector is preferably made of copper, and particularly preferably a copper foil. The thickness of the electrode current collector is, for example, about 5 µm to 20 µm, and preferably 8 µm to 15 µm.

Film formation using the moisture powder will be described. The film formation using the moisture powder can be performed using a known roll film formation device. Appropriate examples of film formation devices include a roll film formation device 20 as schematically shown in FIG. 4. The roll film formation device 20 includes a pair of rotary rollers 21 and 22: the first rotary roller 21 (hereinafter referred to as a "supply roller 21") and the second rotary roller 22 (hereinafter referred to as a "transfer roller 22"). The outer peripheral surface of the supply roller 21 and the outer peripheral surface of the transfer roller 22 face each other, and this pair of rotary rollers 21 and 22 can rotate in directions opposite to each other as indicated by the arrows shown in FIG. 4.

The supply roller 21 and the transfer roller 22 are separated by a distance corresponding to a desired thickness of the electrode active material layer (coating film) 33 formed on the long sheet-shaped electrode current collector 31. That is, there is a gap with a predetermined width between the supply roller 21 and the transfer roller 22, and it is possible to control the thickness of the coating film 33 made of the moisture powder (electrode mixture) 32 adhered to the surface of the transfer roller 22 depending on the size of the gap. In addition, by adjusting the size of the gap, it is possible to adjust a force with which the moisture powder 32 that passes between the supply roller 21 and the transfer roller 22 is compressed. Therefore, by making the gap size relatively large, it is possible to maintain the gas phase of the moisture powder 32 (specifically, each agglomerated particle) produced in the pendular state or the funicular state.

A partition wall 25 is provided at both ends of the supply roller 21 and the transfer roller 22 in the width direction. The partition wall 25 holds the moisture powder 32 on the supply roller 21 and the transfer roller 22 and has a function of defining the width of the coating film (electrode active material layer) 33 formed on the electrode current collector 31 by a distance between the two partition walls 25. The electrode material (moisture powder) 32 is supplied between the two partition walls 25 by a feeder (not shown) or the like. In the film formation device 20, a backup roller 23 is disposed as a third rotary roller next to the transfer roller 22. The backup roller 23 has a function of transporting the electrode current collector 31 to the transfer roller 22. The transfer roller 22 and the backup roller 23 rotate in directions opposite to each other as indicated by the arrows shown in FIG. 4.

The supply roller 21, the transfer roller 22, and the backup roller 23 are connected to mutually independent driving devices (motors) (not shown), and the moisture powder 32 is transported along the transfer roller 22 by gradually increasing rotational speeds of the supply roller 21, the transfer roller 22 and the backup roller 23 in that order, and the moisture powder can be transferred as the coating film 33 on the surface of the electrode current collector 31 transported by the backup roller 23 from the circumferential surface of the transfer roller 22.

Here, in FIG. 4, the supply roller 21, the transfer roller 22, and the backup roller 23 are disposed so that their rotating shafts are arranged horizontally, but the arrangement is not limited thereto, and for example, the backup roller (refer to FIG. 5) may be disposed at a position as shown in FIG. 5.

Here, the sizes of the supply roller 21, the transfer roller 22 and the backup roller 23 are not particularly limited, and may be the same as those of the conventional roll film formation device, and for example, the diameters may be 50 mm to 500 mm. The diameters of these three types of the rotary rollers 21, 22, and 23 may be the same or different. In addition, the width of the coating film formed may be the same as that of the conventional roll film formation device, and can be appropriately determined according to the width of the electrode current collector on which the coating film will be formed. In addition, the material of the circumferential surface of the rotary rollers 21, 22, and 23 may be the same as the material of the rotary roller in the conventional known roll film formation device, and examples thereof include SUS steel and SUJ steel.

As in the above roll film formation device (FIG. 4), the film formation unit 40 includes a supply roller 41, transfer rollers 42, 43, and 44 and a backup roller 45 connected to mutually independent driving devices (motors) (not shown).

As shown, the film formation unit according to the present embodiment includes a plurality of continuous transfer rollers. In this example, it includes the first transfer roller 42 that faces the supply roller 41, the second transfer roller 43 that faces the first transfer roller, and the third transfer roller 44 that faces the second transfer roller and also faces the backup roller 45.

With such a configuration, the sizes of gaps G1 to G4 between rollers can be made different, and an appropriate coating film can be formed while maintaining communication holes for the moisture powder. This will be described below in detail.

As shown, when the gap between the supply roller 41 and the first transfer roller 42 is the first gap G1, the gap between the first transfer roller 42 and the second transfer roller 43 is the second gap G2, the gap between the second transfer roller 43 and the third transfer roller 44 is the third gap G3, and the gap between the third transfer roller 44 and the backup roller 45 is the fourth gap G4, the sizes of the gaps are set so that the first gap G1 is relatively a maximum, and the second gap G2, the third gap G3, and the fourth gap G4 are gradually reduced in this order (G1>G2>G3>G4). When multi-stage roll film formation in which the gaps gradually decreases in the transport direction (traveling direction) of the electrode current collector 31 is performed in this manner, excessive crushing of the agglomerated particles constituting the moisture powder 32 can be prevented, communication holes can be maintained and isolated voids can be prevented from being generated in the agglomerated particles. That is, the film formation unit 40 can be operated as follows.

Since the supply roller 41, the first transfer roller 42, the second transfer roller 43, the third transfer roller 44 and the backup roller 45 are connected to independent driving devices (motors) (not shown), they can be rotated at different rotational speeds. Specifically, the rotational speed of the first transfer roller 42 is higher than the rotational speed of the supply roller 41, the rotational speed of the second transfer roller 43 is higher than the rotational speed of the first transfer roller 42, the rotational speed of the third transfer roller 44 is higher than the rotational speed of the second transfer roller 43, and the rotational speed of the backup roller 45 is higher than the rotational speed of the third transfer roller 44.

In this manner, when the rotational speed between rotary rollers is gradually increased in the current collector transport direction (traveling direction), it is possible to perform multi-stage roll film formation different from that of the roll film formation device 20 in FIG. 4. In this case, as described above, when the first gap G1, the second gap G2, the third gap G3, the fourth gap G4 are set to gradually decrease in this order, the moisture powder 32 supplied to the film formation unit 40 can maintain its gas phase state, that is, can maintain communication holes without generation of excessive isolated voids and prevent isolated voids from being generated in the agglomerated particles. Although not particularly limited, the size (width) of the gaps G1 to G4 may be set to a gap size of 10 µm to 300 µm or less (for example, 20 µm or more and 150 µm or less).

In this manner, when the coating film composed of the moisture powder is transferred onto the electrode current collector while adjusting a force for the device to compress the moisture powder 32 and the coating film made of the moisture powder 32 by a known roll film formation device, film formation can be performed when the gas phase of the moisture powder remains.

### Electrode Active Material Layer Forming Step

In the electrode active material layer forming step S103, concavities/convexities are transferred on the surface part of the formed coating film using a mold having a convex part with a predetermined height. In addition, the coating film to which concavities/convexities are transferred is dried, and as necessary, the dried coating film is pressed. Therefore, for the electrode active material layer, the electrode active material layer in which a predetermined convex part is formed is formed.

In the electrode active material layer forming step S103, first, concavities/convexities are transferred on the surface of the formed coating film according to a known method. For example, concavities/convexities can be transferred on the surface of the coating film by pressing a rotary roller having a predetermined pattern formed on the surface. In the present embodiment, concavities/convexities are transferred by the coating film processing unit 50 of the electrode production device 70 as shown in FIG. 5. The coating film processing unit 50 includes a pressing roller 52 for adjusting the density and film thickness of the coating film, and a first concave/convex processing roller 54 and a second concave/convex processing roller 56 for transferring concavities/convexities on the surface of the coating film.

The average porosity (gas phase rate) of the coating film for transferring concavities/convexities is preferably at least 1% or more, and may be, for example, 1% or more and 55% or less, typically 5% or more and 55% or less. If concavities/convexities are formed when the gas phase remains, since the spreadability is improved, a desired concave/convex shape can be imparted to the coating film with a load smaller than in the related art. In addition, even if a load is applied to form concavities/convexities, a concave/convex shape can be formed on the surface part of the coating film without locally increasing the density (densification).

Here, in this specification, the "average porosity (gas phase rate) of the coating film" can be calculated by, for example, observing the cross section of the electrode active material layer using a scanning electron microscope (SEM). The cross-section image is subjected to binarization processing so that the solid phase or liquid phase part turns white and the gas phase (void) part turns black using image analysis software "ImageJ" which is an open source and well-known as public domain image processing software. Thereby, "S2/(S1+S2)×100" can be calculated where an area of a part (white part) in which a solid phase or a liquid phase is present is called S1, and an area of a void part (black part) is called S2. This is defined as a porosity of the coating film before drying. A plurality of cross-sectional SEM images are acquired (for example, 5 or more images), and the average value of the porosities is defined as an "average porosity (gas phase rate) of the coating film" before drying. Here, the "average porosity (gas phase rate) of the coating film" does not include a concave part (that is, macro voids) formed in the process of forming concavities/convexities.

The first concave/convex processing roller 54 and the second concave/convex processing roller 56 for transferring concavities/convexities on the surface of the coating film will be described.

The first concave/convex processing roller 54 and the second concave/convex processing roller 56 each have a convex part on the surface (that is, the outer peripheral surface of the roller) that the coating film abuts. The shape of the convex part is not particularly limited, and may be, for example, a linear shape extending in a certain direction on the outer peripheral surface of the concave/convex processing roller. The convex part may be provided so that it extends perpendicular to the rotating shaft of the concave/convex processing roller. When the concave/convex processing roller having a convex part having such a shape is used, grooves (so-called "vertical grooves") extending in the transport direction of the electrode current collector can be formed on the coating film. The convex part may be provided so that it extends parallel to the rotating shaft of the concave/convex processing roller. When the concave/convex processing roller having a convex part having such a shape is used, grooves (so-called "horizontal grooves") extending in a direction orthogonal to the transport direction of the electrode current collector can be formed on the coating film. A plurality of such convex parts may be provided with certain pitches for one concave/convex processing roller.

For example, when the first concave/convex processing roller 54 has a plurality of convex parts extending perpendicular to the rotating shaft and the second concave/convex processing roller 56 has a plurality of convex parts extending parallel to the rotating shaft, vertical grooves and horizontal grooves are imparted to the coating film. That is, lattice-like grooves are imparted to the coating film. The linear pressure of the concave/convex processing roller is not particularly limited because it may vary depending on the size of desired grooves and the like, but can be set to about 15 N/cm to 75 N/cm, for example, about 25 N/cm to 65 N/cm.

The convex part is not limited to one extending perpendicular or parallel to the rotating shaft of the concave/convex processing roller as described above. For example, the convex part may be provided in a spiral shape with the rotating shaft of the concave/convex processing roller as a central axis. When the concave/convex processing roller having a convex part having such a shape is used, grooves extending in a direction inclined from the transport direction of the electrode current collector can be formed on the coating film.

In addition, the convex part of the first concave/convex processing roller 54 and the second concave/convex processing roller 56 is not limited to the linear part as described above. In the concave/convex processing roller, for example, a protruding convex part may be provided. The top of the protruding convex part may be flat, bent, or shaped so that the tip is tapered. Such protruding convex parts may be provided with a certain pitch so that depressions with a certain pattern are formed on the surface of the coating film, for example, in a direction perpendicular to and a direction parallel to the rotating shaft of the concave/convex processing roller. The protruding convex part may have, for example, a circular shape or a polygonal shape such as a triangle or a rectangle.

Here, the height, width, area, pitch and the like of the convex parts of the first concave/convex processing roller 54 and the second concave/convex processing roller 56 are appropriately set according to the shape, size, density and the like of the desired coating film. In addition, in the present embodiment, concavities/convexities are transferred by the first concave/convex processing roller 54 and the second concave/convex processing roller 56, but the number of concave/convex processing rollers is not limited to two. For example, concavities/convexities may be transferred by one concave/convex processing roller.

The pitch between the concave part and the convex part of the concave/convex processing roller can be set to, for example, 0.6 mm or more and 5 mm or less (for example, 1 mm or more and 3 mm or less). The pressure can be set to, for example, 0.01 MPa to 100 MPa, for example, about 0.1 MPa to 70 MPa.

Here, before concavities/convexities are transferred to the coating film by the first concave/convex processing roller 54 and the second concave/convex processing roller 56, the density, the film thickness and the like of the coating film may be adjusted by the pressing roller 52.

The pressing roller 52 includes a backup roller 52B that supports the electrode current collector 31 that has been transported and sends it in the traveling direction, and a work roller 52A which is disposed at a position facing the backup roller 52B and presses and compresses the coating film 33 in the film thickness direction. The pressing roller 52 can press and compress the coating film 33 composed of the moisture powder 32 in a pendular state or a funicular state (preferably, the funicular I state) formed (deposited) on the transported electrode current collector 31 to the extent that no isolated voids are generated. An appropriate pressure of the pressing roller 52 is not particularly limited because it may vary depending on the film thickness and density of a desired coating film (electrode active material layer), and can be set to about 0.01 MPa to 100 MPa, for example, about 0.1 MPa to 70 MPa.

In the electrode active material layer forming step S103, the coating film to which concavities/convexities are transferred is then dried.

As shown in FIG. 5, a drying chamber 62 including a heating device (heater) (not shown) as the drying unit 60 is disposed downstream from the coating film processing unit 50 of the electrode production device 70 in the current collector transport direction, and the coating film 33 on the surface of the electrode current collector 31 transported from the coating film processing unit 50 is dried. Here, since the drying unit 60 may be the same as the drying unit in this type of conventional electrode production device, and does not particularly characterize the present disclosure, more detailed description thereof will be omitted.

In the electrode active material layer forming step S103, as necessary, the dried coating film is pressed. Here, pressing may be performed at a pressure higher than the pressure when concavities/convexities are transferred. For example, in roll pressing by a roll rolling mill, the linear pressure is preferably set to about 1 ton/cm to 5 ton/cm. In the case of pressing by a flat plate rolling mill, the linear pressure is preferably set to, for example, about 100 to 500 MPa.

As described above, the electrode active material layer on which the concave part is formed is formed. The size of the concave part and the like can be adjusted by, for example, the shape of the concave/convex processing roller used for transferring concavities/convexities in the electrode active material layer forming step S103, the gap width between rollers, the pressure, or the like.

Here, in the coating film produced using the gas-phase-controlled moisture powder used here, communication holes that lead to the outside are formed in the coating film. Therefore, the coating film can be compressed without generating excessive isolated voids. In addition, since the coating film has excellent spreadability, a desired concave/convex pattern is formed and maintained even if it is in a moisture state before drying.

In the method of producing an electrode for a secondary battery according to the present embodiment, the gas-phase-controlled moisture powder is used. In such a method, the obtained electrode may have the following features.
(1) The average surface area when the surface area in a reference area indicated by L cm×B cm (L and B are an integer of 3 or more) in the electrode active material layer is measured at n (n is an integer of 5 or more) different points is 1.05×L×B cm² or more.
(2) The gas residual rate ((volume of air/volume of coating film)× 100) in the electrode active material layer is 10 vol% or less.
(3) In a void distribution based on void observation by a radiation X-ray laminography method for the electrode active material layer, the void ratio of the volume of 2,000 µm³ or more to the total void volume (100 vol%) is 30 vol% or less.
(4) The electrode active material layer is uniformly divided into two layers, an upper layer and a lower layer, in the thickness direction from the surface of the electrode active material layer to the electrode current collector, and when the concentrations (mg/L) of the binder resin of the upper layer and the lower layer are called C1 and C2, there is a relationship of 0.8≤(C1/C2)≤1.2.

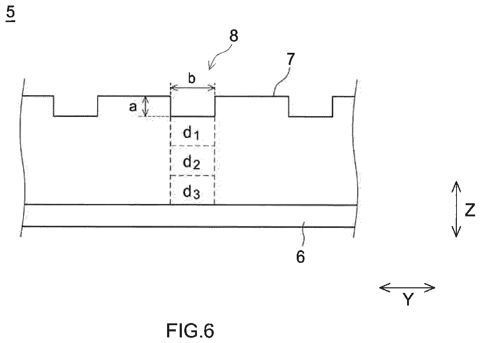

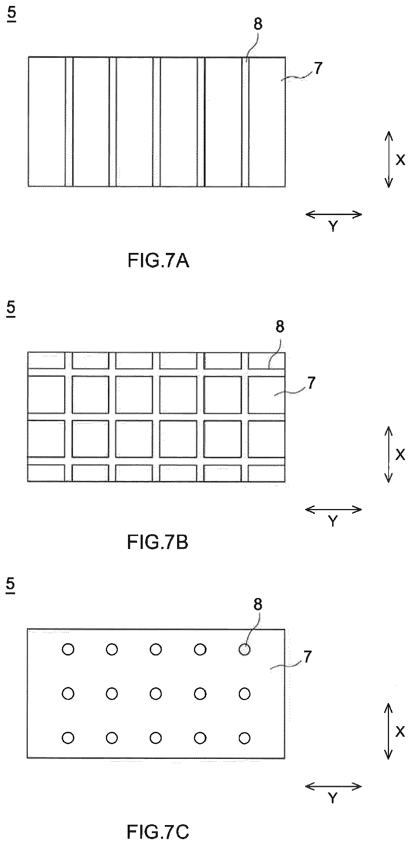

In this manner, a sheet-shaped electrode for a secondary battery used for constructing a lithium ion secondary battery can be produced. FIG. 6 and FIGS. 7A to 7C schematically show the electrode for a secondary battery produced by such a production method. FIG. 6 is a side view schematically showing the electrode for a secondary battery disclosed here. FIGS. 7A to 7C is a plan view schematically showing the electrode for a secondary battery disclosed here.

As shown in FIG. 6, an electrode for a secondary battery 5 includes an electrode current collector 6, and an electrode active material layer 7 formed on the electrode current collector 6. The electrode active material layer 7 contains active material particle as an electrode active material. A concave part 8 is formed on the surface of the electrode active material layer 7. Here, in FIGS. 7A to 7C, the electrode current collector is not shown.

The average film thickness of the electrode active material layer 7 is not particularly limited, and may be, for example, 10 µm or more and 300 µm or less (for example, 20 µm or more and 250 µm or less). In order to increase the capacity of the battery, the average film thickness is preferably thicker than in the related art, and may be, for example, about 150 µm or more and 300 µm or less (for example, 200 µm or more and 250 µm or less). Here, the average film thickness of the electrode active material layer refers to the average film thickness of the part in which no concave part is formed in the electrode active material layer.

In the present embodiment, as shown in FIG. 7A, the concave part 8 has a shape such as a groove formed continuously from one end to the other end in the width direction (X direction). A plurality of concave parts 8 are formed with a certain pitch in the length direction. Here, in this specification, the "pitch" refers to the smallest unit in which the concave part 8 is repeated. The pitch of the concave part 8 is not particularly limited, but may be 0.6 mm or more, for example, 1 mm or more. In addition, the pitch of the concave parts 8 may be 5 mm or less, and may be, for example, 3 mm or less.

Incidentally, the surface area of the electrode active material layer can be increased by forming the concave part on the electrode active material layer. In the lithium ion secondary battery, during charging/discharging, lithium ions are inserted into and desorbed from the surface of the electrode active material layer. Therefore, it is thought that the diffusion resistance of lithium ions can be reduced by increasing the surface area of the electrode active material layer.

However, according to the findings of the inventors, the degree of decrease in the ion diffusion resistance can vary depending on the pattern of the surface shape of the electrode active material layer. For example, when the depth of the concave part increases, the surface area of the electrode active material layer increases as described above. This contributes to a decrease in the ion diffusion resistance of the electrode active material layer. At the same time, the electrode active material is crushed and thus the electrode active material is in a more compressed state. This contributes to an increase in the ion diffusion resistance of the electrode active material layer.

The inventors have conducted extensive studies and as a result, found that, when the electrode active material layer and the concave part formed on the electrode active material layer have the following characteristics, it is possible to suitably reduce ion diffusion resistance.
(1) The porosity of the electrode active material layer is 10% or more and 50% or less.
(2) The area ratio of the concave part is 2% or more and 40% or less.
(3) The volume ratio of the concave part is 5% or more and 14% or less.

In this specification, the "area ratio of concave part" is a ratio of the opening area of the concave part to the area of the electrode active material layer in a plan view. The area ratio of the concave part can be obtained, for example, by surface-observing a part of the surface of the electrode active material layer using a scanning electron microscope (SEM), and calculating the ratio of the opening area of the concave part to the unit area.

In this specification, the "volume ratio of the concave part" is a ratio of the volume of the concave part to the volume of the electrode active material layer. Here, the volume of the electrode active material layer refers to the volume of the electrode active material layer including the volume of the concave part, and is obtained, for example, by a product of the area of the electrode active material layer in a plan view and the thickness (average film thickness) of the part of the electrode active material layer in which no concave part is formed. The volume of the concave part can be obtained, for example, from the size of the concave part in a cross section of the electrode active material layer, and the pitch of the concave parts. For example, the volume ratio of the concave part is calculated from the volume of the concave part per unit volume of the electrode active material layer.

In this specification, the "porosity of the electrode active material layer" refers to a ratio of voids in the electrode active material layer to the volume of the electrode active material layer. Here, the volume of the electrode active material layer is the volume of the electrode active material layer including the volume of the concave part described above. The voids in the electrode active material layer are measured from the sum of the volume of the concave part described above and the amount of voids contained in the electrode active material layer. The voids contained in the electrode active material layer can be measured using, for example, a mercury porosimeter.

Generally, when the porosity of the electrode active material layer is higher, the ion diffusion resistance is lower. In this regard, the porosity of the electrode active material layer may be 10% or more and preferably 33% or more, for example, 35% or more. On the other hand, if the porosity of the electrode active material layer is too high, this is not preferable in consideration of the energy density and the like. The porosity of the electrode active material layer may be 50% or less, for example, 45% or less. For example, the porosity of the electrode active material layer can be adjusted within the above range by using hollow active material particles as active material particles. When the hollow active material is used as active material particles, the porosity of the electrode active material layer is higher than when active material particles having no hollow part (hereinafter referred to as a solid active material) are used. The porosity varies depending on the ratio of the hollow part to the active material particles and the like, but when the hollow active material is used as active material particles, the porosity is about 10% to 25% higher than when the solid active material is used. When the solid active material is used, the porosity is preferably 10% or more. The porosity when the solid active material is used may be 35% or less or 25% or less.

Since the electrode density (g/cm³) varies depending on the electrode material used and the like, it cannot be said unconditionally, and for example, when the electrode is a positive electrode, the electrode density is preferably 1.0 g/cm³ or more and 4.5 g/cm³ or less, more preferably 2.0 g/cm³ or more and 4.2 g/cm³ or less, and still more preferably 2.2 g/cm³ or more and 3.8 g/cm³ or less. When the electrode is a negative electrode, for example, the electrode density is preferably 0.8 g/cm³ or more and 2.0 g/cm³ or less, more preferably 0.9 g/cm³ or more and 1.8 g/cm³ or less, and still more preferably 1.0 g/cm³ or more and 1.6 g/cm³ or less.

Here, in this specification, the "electrode density (g/cm³)" is a density of solid components excluding voids (gas phase) in the electrode active material layer (that is, the coating film after drying). For example, the electrode density (g/cm³) can be obtained by dividing the mass of the electrode active material layer by the apparent volume of the electrode active material layer. The apparent volume of the electrode active material layer can be obtained from a product of the area of the electrode active material layer in a plan view and the thickness of the part of the electrode active material layer in which no concave part is formed.

Since the electrode active material layer 7 is produced using a gas-phase-controlled moisture powder, the difference in the electrode density in the thickness direction is small even if the concave part 8 is formed.

That is, the electrode active material layer 7 is uniformly divided into three layers, an upper layer, an intermediate layer and a lower layer, in the thickness direction from the surface of the concave part 8 to the electrode current collector 6, and when the electrode densities (g/cm³) of the upper layer, the intermediate layer, and the lower layer are d₁, d₂, and d₃, respectively, they have a relationship of 0.8<(d₁/d₃)<1.1. It is more preferable that the electrode density have a relationship of 0.9<(d₁/d₃)<1.05.

Generally, when concavities/convexities are transferred by performing a pressing operation on the coating film after drying or the like, the surface (in particular, the surface of the bottom of the concave part) of the coating film is specifically densified, and there are risks of cracks or partial falling (peeling) occurring on the surface of the electrode active material layer with the concave/convex surface formed. When concavities/convexities are transferred using a gas-phase-controlled moisture powder, the difference in the electrode density of the electrode active material layer in the thickness direction can be reduced as described above.

Here, the lower layer is a position about 33% into the thickness of the electrode active material layer 7 from the interface between the electrode active material layer 7 and the electrode current collector 6 in the thickness direction (Z direction). The intermediate layer is a position of about 33% to 66% of the thickness of the electrode active material layer 7 in the thickness direction (Z direction) of the electrode active material layer 7. The upper layer refers to a position of about 66% to 100% of the thickness of the electrode active material layer 7.

The electrode densities of the upper layer, the intermediate layer and the lower layer can be obtained, for example, by multiplying the true density of the electrode by a filling rate in the corresponding range (that is, any of the upper layer, the intermediate layer and the lower layer). The true density of the electrode is, for example, a value calculated based on the density and proportional content of constituent components. The filling rate in the corresponding range can be calculated, for example, by performing binarization processing in cross section observation of the electrode active material layer using a scanning electron microscope (SEM). Specifically, the above "ImageJ" can be used for calculation.

As shown in FIG. 7A, the pattern of the concave part 8 is not limited to grooves continuously formed in one direction from one end in the width direction (X direction) to the other end. For example, as shown in FIG. 7B, the concave part 8 may be formed in a lattice form so that grooves continuously formed from one end in the width direction (X direction) to the other end and grooves continuously formed from one end in the length direction (Y direction) to the other end intersect. In addition, for example, as shown in FIG. 7C, the concave part 8 may have a shape such as a hole formed with a certain pitch in the width direction (X direction) and the length direction (Y direction).

In addition, the size of the concave part 8 is not particularly limited. Although not limited thereto, for example, the aspect ratio a/b calculated from the depth a (refer to FIG. 6) of the concave part with respect to the width b of the concave part may be 0.05 or more or 0.1 or more. In addition, in consideration of ease of processing of the concave part, the aspect ratio a/b may be 3 or less, for example, 1.5 or less.

In the embodiment shown in FIG. 6, the side surface of the concave part 8 is perpendicular to the surface of the electrode active material layer 7. In addition, the bottom of the concave part 8 is a flat surface parallel to the surface of the electrode active material layer 7. However, the concave part is not limited to such a form. For example, the concave part may have a shape in which the side surface is inclined so that it gradually narrows from the opening toward the bottom. The concave part may have a shape in which the side surface is inclined and the bottom is wider than the opening so that it gradually widens from the opening toward the bottom. The bottom of the concave part does not have to be flat, and may be bent. In addition, for example, the concave part may have a shape having no bottom such as a V shape.

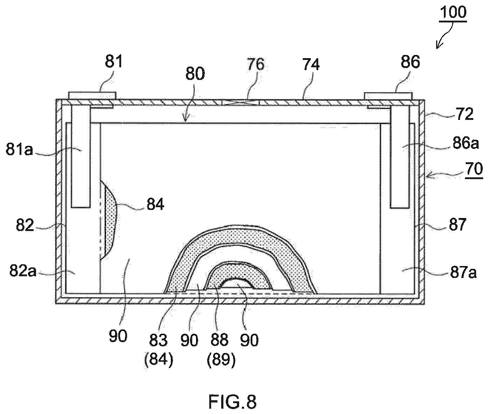

FIG. 8 is a partial cross-sectional view of a lithium ion secondary the battery 100 that can be constructed using the electrode for a secondary battery disclosed here.

The lithium ion secondary battery (non-aqueous electrolyte solution secondary battery) 100 is a battery in which a flat wound electrode body 80 and a non-aqueous electrolyte solution (not shown) are accommodated in a battery case (that is, an outer container) 70. The battery case 70 is composed of a box-shaped (that is, a bottomed rectangular parallelepiped shape) case main body 72 having an opening at one end (corresponding to an upper end of the battery that is in a general use state) and a lid body 74 that seals the opening of the case main body 72. Here, the wound electrode body 80 that is in a direction in which the winding axis of the wound electrode body is laid on its side (that is, the winding axis direction of the wound electrode body 80 and the surface direction of the lid body 74 are substantially parallel) is accommodated in the battery case 70 (the case main body 72). Regarding the material of the battery case 70, for example, a lightweight metal material having favorable thermal conductivity such as aluminum, stainless steel, and nickel-plated steel can be preferably used.

In addition, a positive electrode terminal 81 and a negative electrode terminal 86 for external connection are provided in the lid body 74. In the lid body 74, an exhaust valve 76 that is set, when an internal pressure of the battery case 70 increases to a predetermined level or more, to release the internal pressure, and an injection port (not shown) for injecting a non-aqueous electrolyte solution into the battery case 70 are provided. In the battery case 70, the lid body 74 is welded to the periphery of the opening of the battery case main body 72, and thus the boundary between the battery case main body 72 and the lid body 74 can be bonded (sealed).

The wound electrode body 80 is formed by laminating (overlapping) a positive electrode sheet 83 in which a positive electrode active material layer 84 is formed on one surface or both surfaces of a long sheet-shaped positive electrode current collector 82 typically made of aluminum in the longitudinal direction and a negative electrode sheet 88 in which a negative electrode active material layer 89 is formed on one surface or both surfaces of a long sheet-shaped negative electrode current collector 87 typically made of copper in the longitudinal direction with two long separator sheets 90 typically made of a porous polyolefin resin therebetween, and performing winding in the longitudinal direction. At least one (preferably, both) of the positive electrode sheet 83 and the negative electrode sheet 88 is produced by the above production method.

The flat wound electrode body 80 can be formed in a flat shape, for example, by winding the positive and negative electrodes sheets 83 and 88 and the long sheet-shaped separator 90 so that the cross section has a perfectly circular cylindrical shape, and then crushing (pressing) and destructing the cylindrical winding body in one direction orthogonal to the winding axis (typically, in the side surface direction). With such a flat shape, it can be suitably accommodated in the box-shaped (bottomed rectangular parallelepiped) battery case 70. Here, regarding the winding method, for example, a method of winding positive and negative electrodes and separators around a cylindrical winding axis can be suitably used.

Although not particularly limited, the wound electrode body 80 may be a body in which a positive electrode active material layer non-formed part 82a (that is, a part in which the positive electrode active material layer 84 is not formed and the positive electrode current collector 82 is exposed) and a negative electrode active material layer non-formed part 87a (that is, a part in which the negative electrode active material layer 89 is not formed and the negative electrode current collector 87 is exposed) overlap and are wound so that they protrude outward from both ends in the winding axis direction. As a result, a winding core in which the positive electrode sheet 83, the negative electrode sheet 88, and the separator 90 are laminated and wound is formed in the central part of the wound electrode body 80 in the winding axis direction. In addition, in the positive electrode sheet 83 and the negative electrode sheet 88, the positive electrode active material non-formed part 82a and the positive electrode terminal 81 (for example, made of aluminum) can be electrically connected via a positive electrode current collector plate 81a, and the negative electrode active material layer non-formed part 87a and the negative electrode terminal 86 (for example, made of copper or nickel) can be electrically connected via a negative electrode current collector plate 86a. Here, the positive and negative electrodes current collector plates 81a and 86a, and the positive and negative electrodes active material layer non-formed parts 82a and 87a can be bonded by, for example, ultrasonic welding or resistance welding.

Here, regarding the non-aqueous electrolyte solution, typically, a solution containing a supporting salt in a suitable non-aqueous solvent (typically, an organic solvent) can be used. For example, a non-aqueous electrolyte solution that is a liquid at room temperature can be preferably used. Regarding the non-aqueous solvent, various organic solvents used in a general non-aqueous electrolyte solution secondary battery can be used without particular limitation. For example, aprotic solvents such as carbonates, ethers, esters, nitriles, sulfones, and lactones can be used without particular limitation. Regarding the supporting salt, a lithium salt such as LiPF₆ can be suitably used. The concentration of the supporting salt is not particularly limited, and may be, for example, 0.1 to 2 mol/L.

As long as the effects of the present disclosure are not significantly impaired, the non-aqueous electrolyte solution may contain components other than the above non-aqueous solvent and supporting salt, for example, various additives such as a gas generating agent, a film forming agent, a dispersant, and a thickener.

Here, in performing the technology disclosed here, it is not necessary to limit the electrode body to the wound electrode body 80 as shown. For example, a lithium ion secondary battery including a laminated type electrode body formed by laminating a plurality of positive electrode sheets and negative electrode sheets with separators therebetween may be used. In addition, as can be clearly understood from technical information disclosed in this specification, the shape of the battery is not limited to the above rectangular shape. In addition, in the above embodiment, a non-aqueous electrolyte solution lithium ion secondary battery in which the electrolyte is a non-aqueous electrolyte solution has been exemplified, but the present disclosure is not limited thereto, and for example, the technology disclosed here can also be applied to a so-called solid-state battery in which a solid electrolyte is used in place of an electrolyte solution. In this case, the moisture powder in a pendular state or a funicular state is composed so that it contains a solid electrolyte as a solid component in addition to the active material.

An initial charging step is generally performed on a battery assembly to which a non-aqueous electrolyte solution is supplied, and a case in which an electrode body is accommodated is sealed. As in this type of lithium ion secondary battery in the related art, an external power supply is connected between a positive electrode terminal and a negative electrode terminal for external connection for the battery assembly, and initial charging is performed until the voltage between positive and negative electrode terminals at room temperature (typically, about 25°C) reaches a predetermined value. For example, initial charging can be performed by constant current and constant voltage charging (CC-CV charging) in which charging is performed at a constant current of about 0.1C to 10C from when charging starts until the voltage between terminals reaches a predetermined value (for example, 4.3 to 4.8 V), and charging is then performed at a constant voltage until the state of charge (SOC) reaches about 60% to 100%.

Then, an aging treatment is performed and thus it is possible to provide the lithium ion secondary the battery 100 that can exhibit favorable performance. The aging treatment is performed by high temperature aging in which the battery 100 that has been initially charged is held in a high temperature range of 35°C or higher for a 6 hours or longer (preferably, 10 hours or longer, for example, 20 hours or longer). Thereby, it is possible to improve the stability of a solid electrolyte interphase (SEI) coating that may occur on the surface of the negative electrode during initial charging and reduce the internal resistance. In addition, it is possible to improve the durability of the lithium ion secondary battery when stored at high temperatures. The aging temperature is preferably about 35°C to 85°C (more preferably 40°C to 80°C, and more preferably 50°C to 70°C). When the aging temperature is too lower than the above range, the effect of reducing the initial internal resistance may not be sufficient. If the aging temperature is too higher than the range, the electrolyte solution may deteriorate due to decomposition of the non-aqueous solvent and the lithium salt, and the internal resistance may increase. The upper limit of the aging time is not particularly limited, and when the time exceeds about 50 hours, the decrease in the initial internal resistance is very slow, and the resistance value may hardly change. Therefore, in order to reduce cost, the aging time is preferably about 6 to 50 hours (more preferably 10 to 40 hours, for example, 20 to 30 hours).

The lithium ion secondary the battery 100 configured as described above can be used for various applications. Examples of appropriate applications include drive power supplies mounted in vehicles such as electric vehicles (EV), hybrid electric vehicles (HEV), and plug-in hybrid electric vehicles (PHEV). The lithium ion secondary the battery 100 can be used in the form of an assembled battery in which a plurality of batteries are connected in series and/or parallel.

While examples related to the present disclosure will be described below, the present disclosure is not intended to be limited to what is shown in these examples.

### Production of Symmetric Cell

### Example 1

A gas-phase-controlled moisture powder that can be suitably used as a positive electrode material was produced, and a positive electrode active material layer was then formed on an aluminum foil using the produced moisture powder (positive electrode material).

Regarding the positive electrode active material, a lithium transition metal oxide (LiNi_{1/3}Co₁/₃Mn_{1/3}O₂) having an average particle size (Dso) of 20 µm based on a laser diffraction/scattering method was used. Regarding the lithium transition metal oxide, hollow active material particles having hollow parts inside particles were used. In addition, carbon black was used as a conductive material, polyvinylidene fluoride (PVDF) was used as a binder resin, trilithium phosphate (LPO) was used as an additive, and NMP was used as a non-aqueous solvent.

First, solid components including 91 parts by mass of the positive electrode active material, 1.5 parts by mass of PVDF, 5 parts by mass of carbon black and 2.5 parts by mass of LPO were put into a stirring granulation machine having a mixing blade as shown in FIG. 3 (a planetary mixer or a high speed mixer), and mixed and stirred.

Specifically, in the stirring granulation machine having a mixing blade, the rotational speed of the mixing blade was set to 4,500 rpm, a stirring and dispersion treatment was performed for 15 seconds, and thereby a powder material mixture composed of the solid components was obtained. NMP as a solvent was added to the obtained mixture so that the solid component proportion was 90 wt%, stirring granulation compositing was performed at a rotational speed of 300 rpm for 30 seconds, and refining was then performed by stirring at a rotational speed of 4,500 rpm for 2 seconds. Thereby, the moisture powder (positive electrode material) according to this example was produced.

Then, the obtained gas-phase-controlled moisture powder (positive electrode material) was supplied to the film formation unit of the electrode production device, and a coating film was transferred to the surface of a positive electrode current collector made of an aluminum foil prepared separately.

The obtained coating film was transported to the coating film processing unit and concavities/convexities were transferred with a concave/convex processing roller. Concavities/convexities were transferred using a concave/convex processing roller in which convex parts are provided so that the coating film after drying has an area ratio, a volume ratio, and a shape shown in Table 1. Here, a first concave/convex processing roller having a plurality of convex parts extending perpendicular to the rotating shaft and a second concave/convex processing roller including a plurality of convex parts extending parallel to the rotating shaft were used. The coating film to which concavities/convexities were transferred was heated and dried by a coating film drying unit to obtain a positive electrode sheet on which an electrode active material layer was formed.

For the obtained positive electrode sheet, the amount of voids contained in the electrode active material layer was measured using a mercury porosimeter. The porosity of the electrode active material layer was calculated from the volume of the concave part and the amount of voids measured using a mercury porosimeter. The results are shown in Table 1.

ϕ11.28 mm and ϕ15 mm were cut out from the positive electrode sheet. A porous polyolefin sheet having a three-layer structure of PP/PE/PP was prepared as a separator. The cut out positive electrode sheets overlapped so that the electrode active material layers faced each other with a separator therebetween. The overlapping positive electrode sheets were accommodated in a battery case together with a non-aqueous electrolyte solution to produce a symmetric cell example 1. Here, regarding the non-aqueous electrolyte solution, a solution in which LiPF₆ as a supporting salt at a concentration of 1.0 mol/L was dissolved in a mixed solvent containing ethylene carbonate (EC), dimethyl carbonate (DMC), and ethyl methyl carbonate (EMC) at a volume ratio of 1:1:1 was used.

### Examples 2 to 8

Symmetric cell examples 2 to 8 were produced in the same manner as in the above example except that concavities/convexities were transferred using a concave/convex processing roller in which the coating film after drying had an area ratio, a volume ratio, and a shape shown in Table 1. Here, for those in which the shape of the concave part was a vertical groove, concavities/convexities were transferred using a first concave/convex processing roller having a plurality of convex parts extending perpendicular to the rotating shaft.

### Measurement of Ion Diffusion Resistance

The produced symmetric cell examples 1 to 8 were subjected to AC impedance measurement under conditions of 25°C, an amplitude of 10 mV, and a measurement frequency range of 100 kHz to 0.1 Hz. An equivalent circuit was fitted to the obtained Cole-Cole plot (also referred to as a Nyquist plot), and the ion diffusion resistance was determined. The results are shown in Table 1.

### Evaluation of Rate of Change in Ion Diffusion Resistance

A symmetric cell for comparison having the same porosity as that of the symmetric cell examples 1 to 8 was prepared, and the change in the resistance of the symmetric cell examples 1 to 8 in which the concave part was formed on the electrode active material layer was evaluated from comparison with the ion diffusion resistance of the symmetric cell for comparison. The results are shown in Table 1.

Here, in the symmetric cell for comparison, no concave part was formed on the electrode active material layer. In addition, the composition and the like other than the porosity were the same as those of the symmetric cell to be compared. The porosity of the symmetric cell for comparison was adjusted by the gap between rollers during film formation and the pressure during pressing.

### [Table 1]

**Table 1**

| | Concave part | | | Porosity (%) | Ion diffusion resistance (Ω/mm) | Rate of change in resistance (%) |
|---|---|---|---|---|---|---|
| | Area ratio (%) | Volume ratio (%) | Shape | | | |
| Example 1 | 29 | 12 | Lattice | 45 | 279 | -11 |
| Example 2 | 16 | 11 | Groove | 44 | 308 | -3 |
| Example 3 | 18 | 14 | Lattice | 41 | 345 | -2 |
| Example 4 | 40 | 10 | Lattice | 38 | 358 | -2 |
| Example 5 | 2 | 0.9 | Groove | 38 | 378 | +3 |
| Example 6 | 10 | 6.2 | Lattice | 37 | 374 | -4 |
| Example 7 | 6.6 | 5.8 | Groove | 36 | 380 | -5 |
| Example 8 | 89 | 8.9 | Lattice | 32 | 515 | +20 |

As shown in Table 1, the symmetric cell examples 1 to 4, 6, and 7 had an ion diffusion resistance that was reduced to be lower than the symmetric cell for comparison having the same porosity. On the other hand, the symmetric cell examples 5 and 8 had higher ion diffusion resistance than the symmetric cell for comparison. That is, it can be understood that, when the area ratio, the volume ratio and the porosity of the concave part were adjusted to be within a predetermined range, that is, when the area ratio of the concave part was adjusted to 2% or more and 40% or less, and the volume ratio of the concave part was adjusted to 5% or more and 14% or less, it was possible to reduce the ion diffusion resistance.

In addition, when the electrode active material layer of the symmetric cell made of a gas-phase-controlled moisture powder was uniformly divided into three layers, an upper layer, an intermediate layer and a lower layer, in the thickness direction from the surface of the concave part to the electrode current collector, and the electrode densities (g/cm³) of the upper layer, the intermediate layer, and the lower layer were d₁, d₂, and d₃, respectively, they had a relationship of 0.8<(d₁/d₃)<1.1. That is, the surface of the bottom of the concave part was not locally densified. Therefore, it was thought that the effect of reducing the ion diffusion resistance due to the surface shape of the electrode active material layer was suitably exhibited.

Here, evaluation was performed using the positive electrode active material containing a hollow active material as active material particles. It was thought that it was possible to reduce the ion diffusion resistance if the porosity of the electrode active material layer was 33% or more and 50% or less. The active material particles were not limited to such a form. When the area ratio and the volume ratio of the concave part were adjusted to be within a predetermined range, unless the surface of the electrode active material layer was densified, the effect of reducing the ion diffusion resistance was exhibited. For example, even if secondary particles in which a plurality of primary particles were simply aggregated, so-called solid active material particles, were used, it was possible to reduce the ion diffusion resistance by forming the concave part whose area ratio and volume ratio were adjusted to be within the above range. As described above, when the hollow active material was used, even if the area ratio and the volume ratio of the concave part were the same, the porosity increased by about 10% to 25%. Therefore, it was thought that, when the electrode active material layer was formed using the solid active material, it was possible to reduce the ion diffusion resistance when the porosity was 10% or more and 35% or less (for example, 10% or more and 25% or less).

In addition, in the case of the negative electrode, it was possible to reduce the ion diffusion resistance by forming the concave part.

While specific examples of the present disclosure have been described above in detail, these are only examples, and do not limit the scope of the claims. The technologies described in the claims include various modifications and alternations of the specific examples exemplified above.

## Claims

1. An electrode (5) for a secondary battery which is any electrode of positive and negative electrodes of a secondary battery (100), comprising
an electrode current collector (6), and an electrode active material layer (7) formed on the electrode current collector (6) and containing active material particles as an electrode active material,
wherein a concave part (8) is formed on the surface of the electrode active material layer (7),
wherein, when the electrode active material layer (7) is uniformly divided into three layers, an upper layer, an intermediate layer and a lower layer, in the thickness direction from the surface of the concave part (8) to the electrode current collector (6), and the electrode densities (g/cm³) of the upper layer, the intermediate layer, and the lower layer are d₁, d₂, and d₃, respectively, they have a relationship of 0.8<(d₁/d₃)<1.1,
wherein the porosity of the electrode active material layer (7) is 10% or more and 50% or less,
wherein the area ratio of the concave part (8) is 2% or more and 40% or less, and
wherein the volume ratio of the concave part (8) is 5% or more and 14% or less.

2. The electrode (5) for a secondary battery according to claim 1, wherein the active material particles include hollow active material particles.

3. The electrode (5) for a secondary battery according to claim 1 or 2, wherein the porosity of the electrode active material layer (7) is 33% or more and 45% or less.

4. The electrode (5) for a secondary battery according to any one of claims 1 to 3, wherein the concave part (8) is a groove formed continuously from one end to the other end of the surface of the electrode active material layer (7).

5. A secondary battery (100) including positive and negative electrodes,
wherein the electrode (5) according to any one of claims 1 to 4 is provided as at least one electrode of the positive and negative electrodes.
